# EUROPÄISCHE PATENTSCHRIFT

(11) **EP 1 584 839 B1**
(45) Veröffentlichungstag und Bekanntmachung des Hinweises auf die Patenterteilung: **14.11.2007**
(21) Anmeldenummer: 04008581.3
(22) Anmeldetag: 08.04.2004
(51) Int. Cl.: F16F 15/134, F16F 15/123

(54) **Torsionsschwingungsdämpfer**
Torsional vibration damper
Amortisseur de vibrations de torsion

(43) Veröffentlichungstag der Anmeldung: 12.10.2005
(73) Patentinhaber: BorgWarner Inc., Auburn Hills, MI 48326 (US)
(72) Erfinder: Bastel, Norbert, 68794 Rheinhausen (DE); Strauss, Dietmar, 76703 Kraichtal (DE); Schmitt, Dirk, 69207 Sandhausen (DE); Ebner, Till, 64319 Pfungstadt (DE)
(74) Vertreter: Neunert, Peter Andreas

(56) Entgegenhaltungen:
- EP-A- 1 371 875
- DE-A- 10 133 694
- DE-A- 19 522 718
- DE-A- 19 958 814

## Beschreibung

Die Erfindung betrifft einen Torsionsschwingungsdämpfer mit einem mindestens einen Primärmitnehmer aufweisenden antriebsseitigen Primärelement und einem mindestens einen Sekundärmitnehmer aufweisenden abtriebsseitigen Sekundärelement, die entgegen mindestens einem zwischen einem der Primärmitnehmer und einem der Sekundärmitnehmer vorgesehenen Federelement um eine Neutralposition relativ zueinander verdrehbar sind, sowie mit stirnseitig der Federelemente angeordneten Endschuhen, wobei wenigstens einer der Endschuhe derart ausgebildet ist, dass bei Erreichen eines Schwellen-Relativdrehwinkels gegenüber der Neutralposition wenigstens einer der Mitnehmer unter Umgehung des wenigstens einen Endschuhs in direktem Kontakt mit dem Federelement tritt.

Torsionsschwingungsdämpfer oder Drehschwingungsdämpfer sind in unterschiedlichen Variationen und aus verschiedenen Anwendungen bekannt. Insbesondere sind sie im Kraftfahrzeugbau zur elastischen Kopplung von Verbrennungskraftmaschine und Antriebsstrang vorgesehen. Auf diese Weise soll verhindert werden, dass Schwingungen von der Seite der Verbrennungskraftmaschine auf den Antriebsstrang bzw. das Getriebe übertragen werden. Eine derartige Übertragung der Schwingungen ist bei Kraftfahrzeugantrieben vor allen Dingen bei Verbrennungskraftmaschinen mit vergleichsweise wenig Zylindern und bei niedrigen Drehzahlen gegeben. Eine effektive Dämpfung derartiger Schwingungen führt dazu, dass mit niedrigeren Drehzahlen der Verbrennungskraftmaschine gefahren werden kann, was im Allgemeinen einen verringerten Kraftstoffverbrauch mit sich bringt und somit sowohl ökonomisch als auch ökologisch von Vorteil ist.

Torsionsschwingungsdämpfer mit einem antriebsseitigen Primärelement und einem abtriebsseitigen Sekundärelement, welche über eine Federeinrichtung miteinander gekoppelt und um eine Rotationsachse begrenzt gegeneinander verdrehbar sind, sind beispielsweise aus der EP 1 371 875 A1 oder der DE 195 22 718 A1 bekannt. Das Primärelement umfasst einen ersten nachfolgend als Primärmitnehmer bezeichneten Mitnehmer; das Sekundärelement umfasst einen zweiten nachfolgend als Sekundärmitnehmer bezeichneten Mitnehmer. Das Drehmoment wird vom Primärelement mittels des Primärmitnehmers zunächst auf die Federeinrichtung und von dort auf den Sekundärmitnehmer des Sekundärelements übertragen.

Die Federeinrichtung besteht i.d.R. aus einem oder mehreren in Umfangsrichtung des Torsionsschwingungsdämpfers hintereinander angeordneten Federelementen, vorzugsweise Schraubenfedern bzw. Schraubenfedersätzen, die gegebenenfalls durch Gleitschuhe miteinander verbunden sind, und beidendseitig über Endschuhe gegen die jeweiligen Mitnehmer abgestützt sind. Erfolgt eine Momentenübertragung von Primärelement zum Sekundärelement, so wird die beschriebene Drehmomentübertragung als Zug bezeichnet. Erfolgt die Drehmomentübertragung hingegen anders herum vom Sekundärelement auf das Primärelement, so ist von Schub die Rede.

Es hat sich gezeigt, dass bei Zug-/Schubwechsel, insbesondere unter Niedriglastbedingungen, ein Übergabegeräusch hörbar ist. Dieses ist darauf zurückzuführen, dass die Mitnehmer des Primär- bzw. Sekundärelements bei Zug-/Schubwechsel auf die die Federelemente abstützenden Endschuhe schlagen, wobei das angeführte Übergabegeräusch entsteht.

In der DE 101 33 694 A1 wurden aus diesem Grund zusätzliche Federelemente zwischen den Endschuhen und den Mitnehmern angebracht, um deren Aufeinanderschlagen und die damit verbundene Geräuschentwicklung zu vermeiden. Verglichen mit der ursprünglichen Vorrichtung müssen allerdings diese zusätzlichen Federelemente eingesetzt und fixiert werden, was mit höheren Kosten verbunden ist.

Hingegen wird in der DE 199 58 814 A1, von der Erfindung ausgeht, auf derartige zusätzliche Federelemente verzichtet und statt dessen der an der Stirnseite des jeweiligen Federelements anliegende Endschuh so gestaltet, dass dieser die Stirnseite des Federelements nicht vollständig abdeckt. Weiter sind die Mitnehmer mit einem Ausleger versehen, der derart gestaltet ist, dass bei einem Aufeinandertreffen von Mitnehmer und Endschuh zunächst der Ausleger des Mitnehmers an dem Endschuh vorbei direkt auf das Federelement trifft. Hierdurch wird die Bewegung des Mitnehmers zunächst etwas gedämpft, ehe er großflächig auf den Endschuh auftrifft, so dass zumindest bei kleinen zu übertragenden Drehmomenten die oben angeführten Übergabegeräusche verringert werden. Nachteilig bei dieser Vorrichtung ist, dass der anfängliche Dämpfungseffekt nicht stark genug ausfällt, wenn der Mitnehmer mit einem großen Drehimpuls bzw. einem großen Drehmoment beaufschlagt ist. In diesem Fall treten beim Auftreffen des Mitnehmers auf den Anschlag weiterhin Übergabegeräusche auf.

Der Erfindung liegt somit das Problem zu Grunde, ohne zusätzliche Bauelemente kostengünstig einen Torsionsschwingungsdämpfer zur Verfügung zu stellen, in welchem Übergabegeräusche bei Zug-/Schubwechseln sowohl bei großen wie auch kleinen Drehimpulsen bzw. Drehmomenten der Mitnehmer vermieden werden.

Dieses Problem wird erfindungsgemäß gelöst durch einen Torsionsschwingungsdämpfer mit den Merkmalen des Anspruchs 1.

Vorteilhafte Ausführungen und Weiterbildungen der Erfindung sind in den Unteransprüchen angegeben.

Der Erfindung liegt die Idee zu Grunde, den Torsionsschwingungsdämpfer mit Endschuhen zu versehen, die so gestaltet sind, dass sie weiterhin die Führung der Federelemente bewerkstelligen, jedoch zu keiner Zeit des Dämpfungsvorgangs direkt mit dem zugehörigen Mitnehmer in Kontakt kommen, sondern dieser statt dessen stets unmittelbar vorzugsweise auf die Stirnseite des jeweiligen Federelements auftrifft. Dabei dämpfen die Federelemente die Aufschlagbewegung der Mitnehmer, so dass unabhängig vom Drehimpuls der Mitnehmer keine Übergabegeräusche auftreten.

Ein derartiger Endschuh ist also derart ausgebildet, dass der wenigstens eine Mitnehmer in direktem Kontakt mit dem Federelement verbleibt, solange der Schwellen-Relativdrehwinkel überschritten ist. Alternativ oder zusätzlich kann auch der entsprechende Mitnehmer derart ausgebildet sein, dass der wenigstens eine Mitnehmer in direktem Kontakt mit dem Federelement verbleibt, solange der Schwellen-Relativdrehwinkel überschritten ist. Es findet folglich stets eine Drehmomentübertragung vom Mitnehmer auf das Federelement statt, anders als bei der DE 199 58 814 A1, wo ab einem Schwellen-Relativdrehwinkel eine Drehmomentenübertragung vom Mitnehmer auf den Endschuh und vom Endschuh auf das Federelement stattfindet.

Bei einer ersten Ausführungsvariante ist erfindungsgemäß vorgesehen, dass der wenigstens eine Endschuh eine Ausnehmung aufweist, durch welche der entsprechende Mitnehmer hindurchführbar ist, und welche so bemessen ist, dass der Mitnehmer während eines Dämpfungsvorgangs durch diese Aussparung hindurch auf das Federelement trifft, mit dem Endschuh jedoch nie in Berührung kommt.

In einer besonders vorteilhaften Ausführung der Erfindung weist der Endschuh senkrecht zur Dämpfungsrichtung eine offene Struktur auf. Das heißt die die Stirnseite des Federelements bedeckende Seitenfläche des Endschuhs ist nicht als ringförmig geschlossene Fläche ausgeführt, sondern beispielsweise U- oder V-förmig ausgebildet. Auf diese Weise kann der Mitnehmer entlang der Innenwandung des durch eine vordere und eine hintere Seitenscheibe gebildeten Hohlraums geführt werden und den Endschuh ganzflächig durchdringen.

Der in Rede stehende Endschuh kann auch senkrecht zur Drehrichtung im Querschnitt L-förmig ausgebildet sein. Jetzt wird der entsprechende Mitnehmer vorzugsweise an dem einen Schenkel der L-Form vorbeigeführt.

Eine vorteilhafte Weiterbildung der Erfindung besteht darin, den wenigstens einen Endschuh mit mindestens einer Vorrichtung zu versehen, die eine Befestigung des Endschuhs am Federelement ermöglicht. Vorzugsweise ist diese Vorrichtung als Haltenase ausgeführt, mit der Windungen mindestens einer Schraubenfeder des zugehörigen Federelements verklemmbar sind. Auf diese Weise wird verhindert, dass sich der Endschuh während des Dämpfungsbetriebs vom Federelement löst und das Federelement seine Führung verliert. Sofern das Federelement aus mehreren verschiedenen, ineinander angeordneten Schraubenfedern besteht, können insbesondere Befestigungsvorrichtungen vorgesehen werden, die den Endschuh mit unterschiedlichen Schraubenfedern verbinden.

In einer bevorzugten Ausführung der Erfindung werden die Endschuhe nicht an den Federelementen, sondern an den Mitnehmern des Primär- oder des Sekundärelements befestigt und die Endschuhe mit jeweils mindestens einer Anschlagvorrichtung für das zugehörige Federelement versehen, die vorzugsweise als Anschlagnase ausgeführt ist. Diese Anschlagvorrichtungen dienen der Drehmomentübertragung von den Federelementen auf die mit den Endschuhen versehenen Mitnehmer.

Eine vorteilhafte Weiterbildung der Erfindung besteht darin, den Endschuh an seiner der Rotationsachse des Torsionsschwingungsdämpfers abgewandten Seite mit einer Gleitfläche zu versehen. Diese verhindert - vor allem bei einer hohen Drehzahl des Primärelements bzw. Sekundärelements - dass auf Grund von Zentrifugalkräften Windungen des jeweiligen Federelements nach außen gegen die Wandung des durch gewölbte Seitenscheiben gebildeten und die Führung der Federelemente bzw. der Mitnehmer bewerkstelligenden Hohlraums gedrückt werden und dort verkanten. Ein solches Verkanten hätte zur Folge, dass für die Dämpfung der Drehbewegung nur noch der Federweg von der Stelle des Verkantens bis zum Endschuh, auf welchen der Mitnehmer auftrifft, zur Verfügung stünde. Schwingungsanteile, die über diesen reduzierten Federweg nicht gedämpft werden können, werden ungedämpft übertragen.

Es ist vorteilhaft, die Gleitflächen der Endschuhe und gegebenenfalls vorhandener Gleitschuhe in Umfangsrichtung des Torsionsschwingungsdämpfers so weit auszudehnen, dass verhindert wird, dass die Federelemente auf Block gehen.

Darüber hinaus ist es von Vorteil, wenn die der Mantelfläche des Federelements zugewandte Seite des Endschuhs das Federelement wenigstens teilweise umschließt, wie es z. B. bei einem Endschuh mit U-förmigem Querschnitt der Fall ist. Hierdurch ergibt sich eine verbesserte Führung des Federelements.

Des Weiteren wird der Endschuh und die gegebenenfalls vorhandenen Gleitschuhe in vorteilhafter Weise aus Kunststoff gefertigt. Dies hat zum einen den Vorteil der kostengünstigen Herstellbarkeit, zum anderen lässt sich in einfacher Weise eine geringe Gleitreibung am Kontakt Gleit-/Endschuh zur Mantelfläche des Sekundärelements herstellen.

Im Folgenden wird die Erfindung anhand von Figuren näher erläutert. Es zeigen im Einzelnen:
- Figur 1: einen Ausschnitt aus einem Torsionsschwingungsdämpfer mit einem ersten Ausführungsbeispiel erfindungsgemäß ausgebildeter Endschuhe,
- Figur 2: den Torsionsschwingungsdämpfer gemäß Figur 1 in Explosionsdarstellung,
- Figur 3: ein zweites Ausführungsbeispiel eines erfindungsgemäß ausgebildeten Endschuhs für einen Torsionsschwingungsdämpfer,
- Figur 4: einen Querschnitt durch einen Torsionsschwingungsdämpfer mit Endschuhen gemäß der Figur 3.

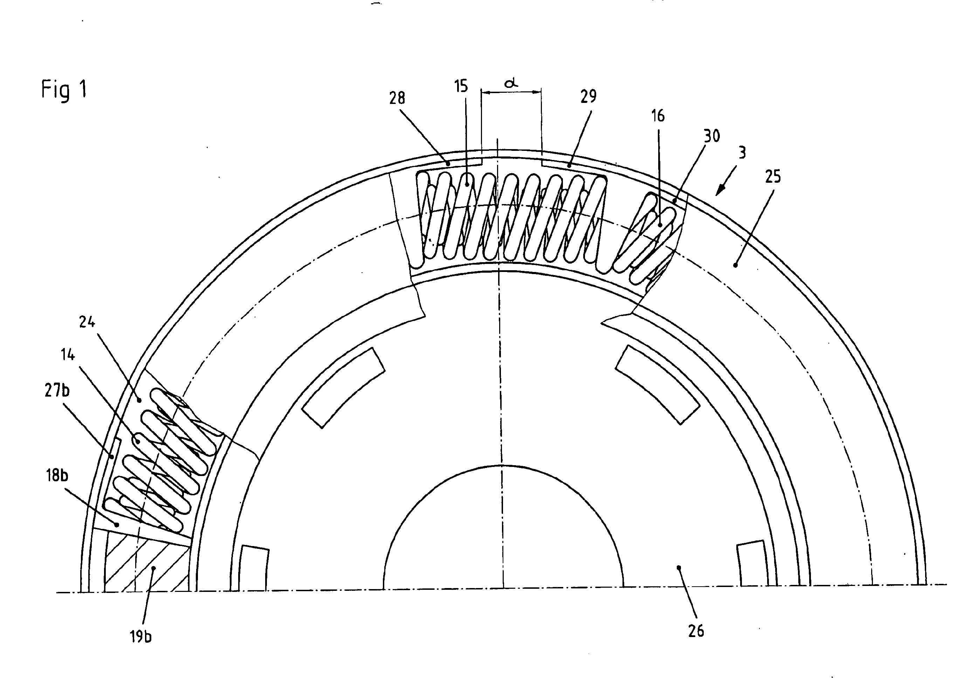

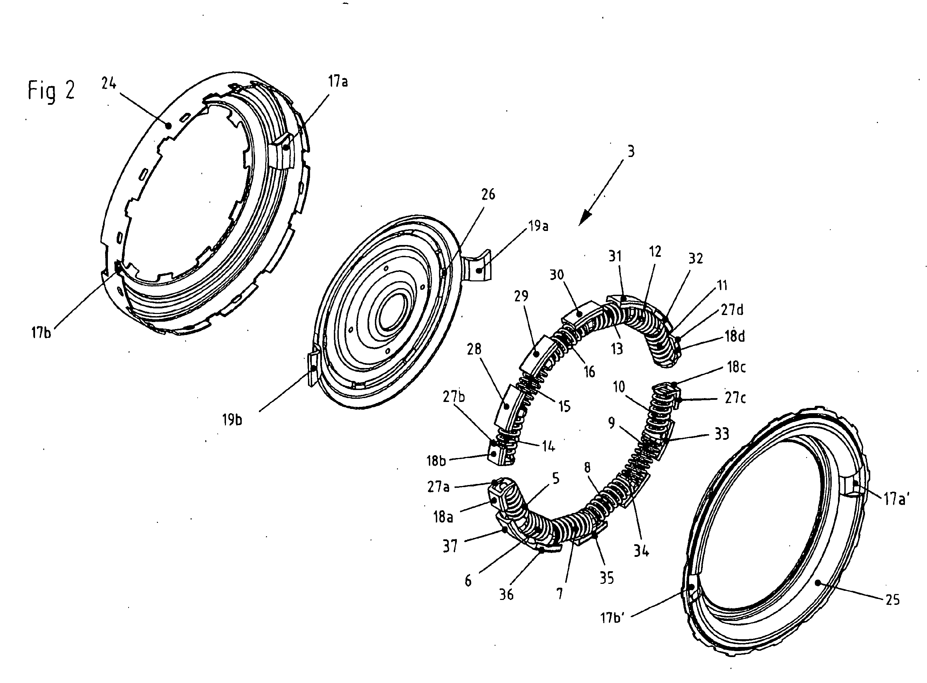

In den Figuren 1 und 2 ist ein Torsionsschwingungsdämpfer 3 mit einem Primärelement in Form einer Mittelscheibe 26 und mit einem Sekundärelement in Form zweier drehfest miteinander verbundener Seitenscheiben 24, 26 dargestellt. Um die Mittelscheibe 26 herum sind in einem durch die hintere Seitenscheibe 24 und durch die vordere Seitenscheibe 25 gebildeten Hohlraum aus mehreren Federsätzen 5, 6, 7, 8, 9, 10, 11, 12, 13, 14, 15, 16 bestehende Federelemente angeordnet. Jeder der Federsätze 5, 6, 7, 8, 9, 10, 11, 12, 13, 14, 15, 16 besteht im vorliegenden Ausführungsbeispiel aus zwei ineinander liegenden Schraubenfedern. Die Federsätze 5, 6, 7, 8, 9, 10 sowie 11, 12, 13, 14, 15, 16 sind durch Abstandshalter, sogenannte Gleitschuhe 28, 29, 30, 31, 32 sowie 33, 34, 35, 36, 37 jeweils ein Federelement bildend hintereinander gereiht. Am jeweiligen Ende eines Federelements ist ein Endschuh 18a, 18b, 18c, 18d angeordnet.

Die Stirnflächen der Endschuhe 18a, 18b, 18c, 18d sitzen in einer Neutralstellung jeweils an einem hier zweiteilig ausgeführten Mitnehmer 17a, 17a'; 17b, 17b' des aus zwei Seitenscheiben 24, 25 bestehenden Sekundärelements 24, 25 auf. Die Endschuhe 18a, 18b, 18c, 18d sind an ihren Stirnseiten U-förmig ausgeführt. Die beiden Schenkel der U-Form sitzen dabei im Wesentlichen formschlüssig auf dem jeweiligen Mitnehmer, bestehend aus den beiden Teilmitnehmern 17a, 17a' bzw. 17b, 17b', des Sekundärelements auf.

Der Zwischenraum zwischen den beiden Schenkeln der U-Form des jeweiligen Endschuhs 18a, 18b, 18c, 18d ist gerade so groß gewählt, dass der Mitnehmer 19b des Primärelements 26 bei einer Relativverdrehung zwischen Primär- und Sekundärelement 24, 25, 26 in eine Drehrichtung direkt auf den Federsatz 14 trifft, ohne den Endschuh 18b zu berühren und dass gleichzeitig der Mitnehmer 19a des Primärelements 26 unmittelbar auf den Federsatz 10 trifft, ohne den Endschuh 18c zu berühren.

Bei einer Relativverdrehung zwischen Primär- und Sekundärelement 24, 25, 26 in die andere Drehrichtung trifft der Mitnehmer 19b des Primärelements 26 unmittelbar auf den Federsatz 5, ohne den Endschuh 18a zu berühren. Gleichzeitig trifft der Mitnehmer 19a des Primärelements 26 auf den Federsatz 11, ohne den Endschuh 18d zu berühren.

Durch diese Maßnahme wird verhindert, dass Übergabegeräusche entstehen.

Der Zeichnung ist weiterhin zu entnehmen, dass die jeweiligen Endschuhe 18a, 18b, 18c, 18d außenumfangseitig Gleitflächen 27a, 27b, 27c, 27d aufweisen, welche sich gegen die Innenwandung eines zylinderförmigen Bereichs einer der Seitenscheiben 24 (oder 25) abstützen. In gleicher Weise wie die Endschuhe 18a, 18b, 18c, 18d sind auch die Gleitschuhe 28, 29, 30, 31, 32, 33, 34, 35, 36, 37 ausgebildet. Auch diese stützen sich außenumfangseitig gegen die Innenwandung des Zylinders der entsprechenden Seitenscheibe 24 (oder 25) ab.

Diese Gleitflächen 27a, 27b, 27c, 27d der Endschuhe 18a, 18b, 18c, 18d sowie die nicht mit Bezugszeichen versehenen Gleitflächen der Gleitschuhe 28, 29, 30, 31, 32, 33, 34, 35, 36, 37 stellen zum einen sicher, dass die Federsätze 5, 6, 7, 8, 9, 10, 11, 12, 13, 14, 15, 16 unter geringer Reibung und ohne Verkanten komprimiert werden, wenn Primär- und Sekundärelemente 24, 25, 26 gegeneinander verdreht werden. Darüber hinaus ist deren Umfangserstreckung im vorliegenden Ausführungsbeispiel so bemessen, dass deren einander zugewandten Stirnflächen in Stoßkontakt treten, bevor die einzelnen Schraubenfedern der Federsätze 5, 6, 7, 8, 9, 10, 11, 12, 13, 14, 15, 16 auf Block gehen. Sie legen somit die maximale Stauchung α der Federsätze 5, 6, 7, 8, 9, 10, 11, 12, 13, 14, 15, 16 fest. Durch diese Maßnahme wird eine Zerstörung der Schaubenfedern bei hohen Drehmomenten verhindert.

Es ist für den Fachmann ohne weiteres ersichtlich, dass dieses Ausführungsbeispiel Gleitflächenabmessungen zeigt, die rein optional zu verstehen sind. Selbstverständlich kann insbesondere deren Umfangserstreckung auch kürzer gewählt werden, wenn ein auf Block gehen der Federn aufgrund der auftretenden Drehmomente entweder nicht möglich oder eine Zerstörung der Federn nicht zu erwarten ist.

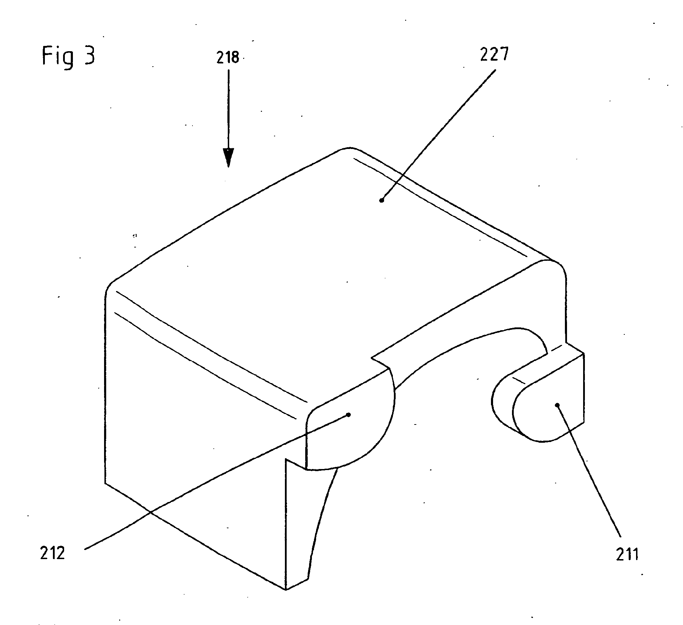

In einem weiteren Ausführungsbeispiel der Erfindung sind die Endschuhe für einen Torsionsschwingungsdämpfer nicht U-förmig ausgebildet, sondern in anderer Weise an den Torsionsschwingungsdämpfer angepasst. Figur 3 zeigt eine perspektivische Darstellung eines derartigen Endschuhs 218.

Der Endschuh 218 ist mit zwei Anschlagnasen 211, 212 versehen, welche Anstoßpunkte für die Stirnfläche des zugehörigen Federelements bilden. Sie verhindern, dass das Federelement mit seiner Stirnseite durch die Stirnfläche des Endschuhs 218 nach vorne hindurchgleitet und das Federelement so seine Führung verliert. Auf der der Rotationsachse des Torsionsschwingungsdämpfers abgewandten Seite weist der Endschuh 218 eine Gleitfläche 227 auf, an deren Innenseite das Federelement entlang gleitet. Die Ausdehnung dieser Gleitfläche 227 ist in Umfangsrichtung des Torsionsschwingungsdämpfers vorzugsweise so bemessen, dass bei maximaler Stauchung der Federelemente deren Enden weiterhin durch die Gleitfläche 227 vom radial außenliegenden Teil des Hohlraums abgeschirmt werden, so dass ein Verkanten der Federwindungen an der Hohlraumwandung sowie die damit verbundene Reduktion der Dämpfungswirkung vermieden wird.

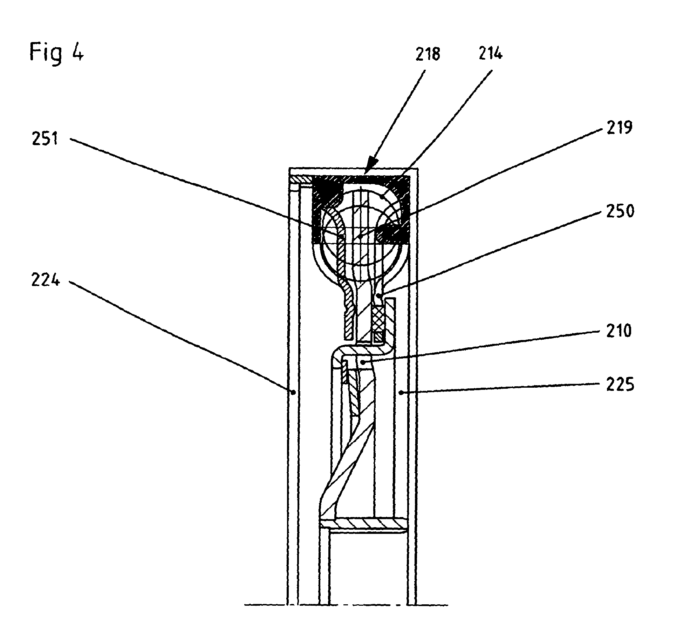

Einen Querschnitt durch den Torsionsschwingungsdämpfer, bei welchem der Endschuh 218 gemäß der Figur 3 eingesetzt ist, gibt Figur 4 wieder. Hierin bilden der vordere Teil des Mitnehmers des Sekundärelements 250 sowie der hintere Teil dieses Mitnehmers 251 gemeinsam den Mitnehmer des Sekundärelements. Auf diesen ist der Endschuh 218 aus Figur 3 aufgesetzt. Er kann gegebenenfalls auch befestigt sein. Dessen Stirnfläche ist in U-Form ausgeführt, so dass der Mitnehmer 219 des Primärelements 210 durch den Endschuh 218 hindurchgreifen kann, ohne mit diesem in Berührung zu kommen. Statt dessen trifft der Mitnehmer 219 direkt auf das Federelement 214 auf, so dass keine Übergabegeräusche entstehen. Der Hohlraum, in welchem die Federelemente sich bewegen, wird durch Zusammenfügen der vorderen Seitenscheibe 225 und der hinteren Seitenscheibe 224 gebildet.

### Bezugszeichenliste

- 3: Torsionsschwingungsdämpfer
- 5: Federsatz
- 6: Federsatz
- 7: Federsatz
- 8: Federsatz
- 9: Federsatz
- 10: Federsatz
- 11: Federsatz
- 12: Federsatz
- 13: Federsatz
- 14: Federsatz
- 15: Federsatz
- 16: Federsatz
- 17a: Mitnehmer Sekundärelement (Vorderteil)
- 17b: Mitnehmer Sekundärelement (Vorderteil)
- 17a': Mitnehmer Sekundärelement (Hinterteil)
- 17b': Mitnehmer Sekundärelement (Hinterteil)
- 18a: Endschuh
- 18b: Endschuh
- 18c: Endschuh
- 18d: Endschuh
- 19a: Mitnehmer Primärelement
- 19b: Mitnehmer Primärelement
- 24: hintere Seitenscheibe (Sekundärelement)
- 25: vordere Seitenscheibe (Sekundärelement)
- 26: Mittelscheibe (Primärelement)
- 27a: Gleitfläche Endschuh
- 27b: Gleitfläche Endschuh
- 27c: Gleitfläche Endschuh
- 27d: Gleitfläche Endschuh
- 28: Gleitschuh
- 29: Gleitschuh
- 30: Gleitschuh
- 31: Gleitschuh
- 32: Gleitschuh
- 33: Gleitschuh
- 34: Gleitschuh
- 35: Gleitschuh
- 36: Gleitschuh
- 37: Gleitschuh

- α: maximale Stauchung

- 211: Anschlagnase
- 212: Anschlagnase
- 218: Endschuh
- 227: Gleitfläche Endschuh

- 210: Primärelement
- 214: Federelement
- 218: Endschuh
- 219: Mitnehmer Primärelement
- 224: hintere Seitenscheibe (Sekundärelement)
- 225: vordere Seitenscheibe (Sekundärelement)
- 250: vorderer Teil Mitnehmer Sekundärelement
- 251: hinterer Teil Mitnehmer Sekundärelement

## Patentansprüche

1. Torsionsschwingungsdämpfer (3) mit einem mindestens einen Primärmitnehmer (19a, 19b; 219) aufweisenden antriebsseitigen Primärelement (26; 210) und einem mindestens einen Sekundärmitnehmer (17a, 17a'; 17b, 17b'; 250, 251) aufweisenden abtriebsseitigen Sekundärelement (24, 25; 224, 225), die entgegen mindestens einem zwischen einem der Primärmitnehmer (19, 19b; 219) und einem der Sekundärmitnehmer (17a, 17a'; 17b, 17b'; 250, 251) vorgesehenen Federelement (5, 6, 7, 8, 9, 10; 11, 12, 13, 14, 15, 16; 214) um eine Neutralposition relativ zueinander verdrehbar sind, sowie mit stirnseitig des jeweiligen Federelements (5, 6, 7, 8, 9, 10; 11, 12, 13, 14, 15, 16; 214) angeordneten Endschuhen (18a, 18b, 18c, 18d; 218), wobei wenigstens einer der Endschuhe (18a, 18b, 18c, 18d; 218) derart ausgebildet ist, dass bei Erreichen eines Schwellen-Relativdrehwinkels gegenüber der Neutralposition wenigstens einer der Mitnehmer (19a, 19b; 219) unter Umgehung des wenigstens einen Endschuhs (18a, 18b, 18c, 18d; 218) in direkten Kontakt mit dem Federelement (5, 6, 7, 8, 9, 10; 11, 12, 13, 14, 15, 16; 214) tritt, wobei der wenigstens eine Endschuh (18a, 18b, 18c, 18d; 218) und/oder der wenigstens eine Mitnehmer (19a, 19b; 219) derart ausgebildet ist bzw. sind, dass der wenigstens eine Mitnehmer (19a, 19b, 219) in direktem Kontakt mit dem Federelement (5, 6, 7, 8, 9, 10; 11, 12, 13, 14, 15, 16; 214) verbleibt, solange der Schwellen-Relativdrehwinkel überschritten ist,
**dadurch gekennzeichnet, dass** der wenigstens eine Endschuh (18a, 18b, 18c, 18d, 218) zu keiner Zeit des Dämpfungsvorgangs direkt mit dem zugehörigen Mitnehmer (19a, 19b, 219) in Kontakt kommt.

2. Torsionsschwingungsdämpfer (3) nach Anspruch 1,
**dadurch gekennzeichnet, dass** der wenigstens eine Endschuh (18a, 18b, 18c, 18d; 218) eine Ausnehmung aufweist, durch welche der entsprechende Mitnehmer (19a, 19b; 219) hindurchführbar ist.

3. Torsionsschwingungsdämpfer (3) nach einem der vorangehenden Ansprüche,
**dadurch gekennzeichnet, dass** der wenigstens eine der Endschuhe (18a, 18b, 18c, 18d; 218) senkrecht zur Drehrichtung einen U-förmigen, V-förmigen oder L-förmigen Querschnitt aufweist und dass der wenigstens eine der Mitnehmer (19a, 19b; 219) durch die beiden Schenkel der U- oder V-Form hindurchführbar bzw. am einzigen Schenkel der L-Form vorbeiführbar ist.

4. Torsionsschwingungsdämpfer (3) nach einem der vorangegangenen Ansprüche,
**dadurch gekennzeichnet, dass** an dem wenigstens einen der Endschuhe (18a, 18b, 18c, 18d; 218) mindestens eine Vorrichtung zu dessen Befestigung am Federelement (5, 6, 7, 8, 9, 10; 11, 12, 13, 14, 15, 16; 214) vorgesehen ist, die vorzugsweise als Haltenase ausgeführt ist.

5. Torsionsschwingungsdämpfer (3) nach einem der vorangegangenen Ansprüche,
**dadurch gekennzeichnet, dass** an dem wenigstens einen der Endschuhe (18a, 18b, 18c, 18d; 218) eine Befestigungsvorrichtung angebracht ist, welche den wenigstens einen Endschuh (5, 6, 7, 8, 9, 10; 11, 12, 13, 14, 15, 16; 214) mit verschiedenen ineinander angeordneten Schraubenfedern des Federelements (5, 6, 7, 8, 9, 10; 11, 12, 13, 14, 15, 16; 214) verbinden.

6. Torsionsschwingungsdämpfer (3) nach einem der vorangegangenen Ansprüche,
**dadurch gekennzeichnet, dass** der wenigstens eine Endschuh (18a, 18b, 18c, 18d; 218) an wenigstens einem der anderen Mitnehmer (17a, 17a'; 17b, 17b'; 250, 251) befestigt ist.

7. Torsionsschwingungsdämpfer (3) nach einem der vorangegangenen Ansprüche,
**dadurch gekennzeichnet, dass** der wenigstens eine Endschuh (18a, 18b, 18c, 18d; 218) mindestens eine Anschlagvorrichtung für wenigstens eines der Federelemente (214) besitzt, welche vorzugsweise als Anschlagnase (211, 212) ausgeführt ist.

8. Torsionsschwingungsdämpfer (3) nach einem der vorangehenden Ansprüche,
**dadurch gekennzeichnet, dass** der wenigstens eine Endschuh (18a, 18b, 18c, 18d; 218) an seiner der Rotationsachse des Torsionsschwingungsdämpfers (3) abgewandten Seite eine Gleitfläche (27a, 27b, 27c, 27d; 227) aufweist.

9. Torsionsschwingungsdämpfer (3) nach einem der vorangehenden Ansprüche,
**dadurch gekennzeichnet, dass** bei dem wenigstens einen Endschuh (18a, 18b, 18c, 18d; 218) die der Mantelfläche des Federelements zugewandte Seite des Endschuhs (18a, 18b, 18c, 18d; 218) das Federelement (5, 6, 7, 8, 9, 10; 11, 12, 13, 14, 15, 16; 214) wenigstens teilweise umschließt.

10. Torsionsschwingungsdämpfer (3) nach einem der vorangehenden Ansprüche,
**dadurch gekennzeichnet, dass** der wenigstens eine der Endschuhe (18a, 18b, 18c, 18d; 218) aus Kunststoff gefertigt ist.

11. Endschuh (18a, 18b, 18c, 18d; 218) für einen Torsionsschwingungsdämpfer (3) nach einem der vorangegangenen Ansprüche, **dadurch gekennzeichnet, dass** der Endschuh (18a, 18b, 18c, 18d; 218) eine Ausnehmung aufweist, durch welche ein Mitnehmer (19a, 19b; 219) hindurchfürbar ist.

12. Endschuh (18a, 18b, 18c, 18d; 218) nach Anspruch 11, **dadurch gekennzeichnet, dass** der Endschuch (18a, 18b, 18c, 18d; 218) senkrecht zur Drehrichtung einen U-förmigen, V-förmigen oder L-förmigen Querschnitt aufweist und dass der Mitnehmer (19a, 19b; 219) durch die beiden Schenkel der U-oder V-Form hindurchführbar bzw. am einzigen Schenkel der L-Form vorbeiführbar ist.

## Claims

1. Torsional vibration damper (3) having a drive-input-side primary element (26; 210) which has at least one primary driver (19a, 19b; 219) and having a drive-output-side secondary element (24, 25; 224, 225) which has at least one secondary driver (17a, 17a'; 17b, 17b'; 250, 251), which primary driver (19a, 19b; 219) and secondary driver (17a, 17a'; 17b, 17b'; 250, 251) are rotatable relative to one another about a neutral position counter to at least one spring element (5, 6, 7, 8, 9, 10; 11, 12, 13, 14, 15, 16; 214) which is provided between the primary driver (19a, 19b; 219) and the secondary driver (17a, 17a'; 17b, 17b'; 250, 251), and having end shoes (18a, 18b, 18c, 18d; 218) which are arranged at the end side of the respective spring element (5, 6, 7, 8, 9, 10; 11, 12, 13, 14, 15, 16; 214), with at least one of the end shoes (18a, 18b, 18c, 18d; 218) being designed such that, when a threshold relative rotational angle with respect to the neutral position is reached, at least one of the drivers (19a, 19b; 219) comes into direct contact with the spring element (5, 6, 7, 8, 9, 10; 11, 12, 13, 14, 15, 16; 214) while bypassing the at least one end shoe (18a, 18b, 18c, 18d; 218), with the at least one end shoe (18a, 18b, 18c, 18d; 218) and/or the at least one driver (19a, 19b; 219) being designed such that the at least one driver (19a, 19b; 219) remains in direct contact with the spring element (5, 6, 7, 8, 9, 10; 11, 12, 13, 14, 15, 16; 214) for as long as the threshold relative rotational angle is exceeded,
**characterized in that** the at least one end shoe (18a, 18b, 18c, 18d; 218) does not at any time during the damping process come directly into contact with the associated driver (19a, 19b; 219).

2. Torsional vibration damper (3) according to Claim 1,
**characterized in that** the at least one end shoe (18a, 18b, 18c, 18d; 218) has a recess through which the corresponding driver (19a, 19b; 219) can be passed.

3. Torsional vibration damper (3) according to one of the preceding claims,
**characterized in that** the at least one of the end shoes (18a, 18b, 18c, 18d; 218) has a U-shaped, V-shaped or L-shaped cross section perpendicular to the rotational direction, and **in that** the at least one of the drivers (19a, 18b, 219) can be passed through the two limbs of the U-shape or V-shape or past the single limb of the L-shape.

4. Torsional vibration damper (3) according to one of the preceding claims,
**characterized in that** the at least one of the end shoes (18a, 18b, 18c, 18d; 218) has provided on it at least one device for fastening it to the spring element (5, 6, 7, 8, 9, 10; 11, 12, 13, 14, 15, 16; 214), which device is preferably designed as a retaining lug.

5. Torsional vibration damper (3) according to one of the preceding claims,
**characterized in that** the at least one of the end shoes (18a, 18b, 18c, 18d; 218) has attached to it a fastening device which connects the at least one end shoe (18a, 18b, 18c, 18d; 218) to different coil springs, which are arranged one inside the other, of the spring element (5, 6, 7, 8, 9, 10; 11, 12, 13, 14, 15, 16; 214).

6. Torsional vibration damper (3) according to one of the preceding claims,
**characterized in that** the at least one end shoe (18a, 18b, 18c, 18d; 218) is fastened to at least one of the other drivers (17a, 17a'; 17b, 17b' ; 250, 251).

7. Torsional vibration damper (3) according to one of the preceding claims,
**characterized in that** the at least one end shoe (18a, 18b, 18c, 18d; 218) has at least one stop device for at least one of the spring elements (214), which stop device is preferably designed as a stop lug (211, 212).

8. Torsional vibration damper (3) according to one of the preceding claims,
**characterized in that** the at least one end shoe (18a, 18b, 18c, 18d; 218) has, at its side facing away from the rotational axis of the torsional vibration damper (3), a sliding face (27a, 27b, 27c, 27d; 227).

9. Torsional vibration damper (3) according to one of the preceding claims,
**characterized in that**, in the at least one end shoe (18a, 18b, 18c, 18d; 218), that side of the end shoe (18a, 18b, 18c, 18d; 218) which faces towards the lateral surface of the spring element at least partially surrounds the spring element (5, 6, 7, 8, 9, 10; 11, 12, 13, 14, 15, 16; 214).

10. Torsional vibration damper (3) according to one of the preceding claims,
**characterized in that** the at least one of the end shoes (18a, 18b, 18c, 18d; 218) is produced from plastic.

11. End shoe (18a, 18b, 18c, 18d; 218) for a torsional vibration damper (3) according to one of the preceding claims, **characterized in that** the end shoe (18a, 18b, 18c, 18d; 218) has a recess through which a driver (19a, 18b; 219) can be passed.

12. End shoe (18a, 18b, 18c, 18d; 218) according to Claim 11, **characterized in that** the end shoe (18a, 18b, 18c, 18d; 218) has a U-shaped, V-shaped or L-shaped cross section perpendicular to the rotational direction, and **in that** the driver (19a, 19b; 219) can be passed through the two limbs of the U-shape or V-shape or past the single limb of the L-shape.

## Revendications

1. Amortisseur de vibrations de torsion (3), comprenant un élément primaire (26 ; 210) du côté de l'entraînement, présentant au moins un dispositif d'entraînement primaire (19a, 19b ; 219) et un élément secondaire (24, 25 ; 224, 225) du côté de la sortie, présentant au moins un dispositif d'entraînement secondaire (17a, 17a' ; 17b, 17b' ; 250, 251), lesquels peuvent tourner l'un par rapport à l'autre autour d'une position neutre à l'encontre d'au moins un élément de ressort (5, 6, 7, 8, 9, 10 ; 11, 12, 13, 14, 15, 16 ; 214) prévu entre l'un des dispositifs d'entraînement primaires (19, 19b, 219) et l'un des dispositifs d'entraînement secondaires (17a, 17a' ; 17b, 17b' ; 250, 251), et comprenant également des sabots d'extrémité (18a, 18b, 18c, 18d ; 218) disposés du côté frontal de l'élément de ressort respectif (5, 6, 7, 8, 9, 10 ; 11, 12, 13, 14, 15, 16 ; 214), au moins l'un des sabots d'extrémité (18a, 18b, 18c, 18d ; 218) étant réalisé de telle sorte que lorsqu'un angle de rotation relatif de seuil est atteint par rapport à la position neutre, au moins l'un des dispositifs d'entraînement (19a, 19b ; 219) parvienne en contact direct avec l'élément de ressort (5, 6, 7, 8, 9, 10 ; 11, 12, 13, 14, 15, 16 ; 214) en contournant l'au moins un sabot d'extrémité (18a, 18b, 18c, 18d ; 218), l'au moins un sabot d'extrémité (18a, 18b, 18c, 18d ; 218) et/ou l'au moins un dispositif d'entraînement (19a, 19b ; 219) étant réalisés de telle sorte que l'au moins un dispositif d'entraînement (19a, 19b ; 219) reste en contact direct avec l'élément de ressort (5, 6, 7, 8, 9, 10 ; 11, 12, 13, 14, 15, 16 ; 214) tant que l'angle de rotation relatif de seuil reste dépassé,
**caractérisé en ce que**
l'au moins un sabot d'extrémité (18a, 18b, 18c, 18d ; 218) ne parvient à aucun moment de l'opération d'amortissement en contact direct avec le dispositif d'entraînement associé (19a, 19b, 219).

2. Amortisseur de vibrations de torsion (3) selon la revendication 1,
**caractérisé en ce que**
l'au moins un sabot d'extrémité (18a, 18b, 18c, 18d ; 218) présente un évidement à travers lequel le dispositif d'entraînement correspondant (19a, 19b ; 219) peut être inséré.

3. Amortisseur de vibrations de torsion (3) selon l'une quelconque des revendications précédentes,
**caractérisé en ce que**
l'au moins un des sabots d'extrémité (18a, 18b, 18c, 18d ; 218) présente une section transversale en forme de U, en forme de V ou en forme de L perpendiculairement au sens de rotation, et **en ce que** l'au moins un des dispositifs d'entraînement (19a, 19b ; 219) peut passer à travers les deux branches de la forme en U ou en V ou peut passer devant la branche unique de la forme en L.

4. Amortisseur de vibrations de torsion (3) selon l'une quelconque des revendications précédentes,
**caractérisé en ce que**
l'on prévoit sur l'au moins un des sabots d'extrémité (18a, 18b, 18c, 18d ; 218) au moins un dispositif pour sa fixation sur l'élément de ressort (5, 6, 7, 8, 9, 10 ; 11, 12, 13, 14, 15, 16 ; 214), ce dispositif étant de préférence réalisé sous forme d'ergot de retenue.

5. Amortisseur de vibrations de torsion (3) selon l'une quelconque des revendications précédentes,
**caractérisé en ce que**
l'on monte sur l'au moins un des sabots d'extrémité (18a, 18b, 18c, 18d ; 218) au moins un dispositif de fixation qui relie l'au moins un sabot d'extrémité (18a, 18b, 18c, 18d ; 218) à différents ressorts à boudin disposés les uns dans les autres de l'élément de ressort (5, 6, 7, 8, 9, 10 ; 11, 12, 13, 14, 15, 16 ; 214).

6. Amortisseur de vibrations de torsion (3) selon l'une quelconque des revendications précédentes,
**caractérisé en ce que**
l'au moins un sabot d'extrémité (18a, 18b, 18c, 18d ; 218) est fixé sur au moins l'un des autres dispositifs d'entraînement (17a, 17a' ; 17b, 17b' ; 250, 251).

7. Amortisseur de vibrations de torsion (3) selon l'une quelconque des revendications précédentes,
**caractérisé en ce que**
l'au moins un sabot d'extrémité (18a, 18b, 18c, 18d ; 218) possède au moins un dispositif de butée pour au moins l'un des éléments de ressort (214), qui est réalisé de préférence sous forme d'ergot de butée (211, 212).

8. Amortisseur de vibrations de torsion (3) selon l'une quelconque des revendications précédentes,
**caractérisé en ce que**
l'au moins un sabot d'extrémité (18a, 18b, 18c, 18d ; 218) présente, sur son côté tourné vers l'axe de rotation de l'amortisseur de vibrations de torsion (3), une surface de glissement (27a, 27b, 27c, 27d ; 227).

9. Amortisseur de vibrations de torsion (3) selon l'une quelconque des revendications précédentes,
**caractérisé en ce que**
dans l'au moins un sabot d'extrémité (18a, 18b, 18c, 18d ; 218), le côté du sabot d'extrémité (18a, 18b, 18c, 18d ; 218) tourné vers la surface d'enveloppe de l'élément de ressort entoure au moins en partie l'élément de ressort (5, 6, 7, 8, 9, 10 ; 11, 12, 13, 14, 15, 16 ; 214).

10. Amortisseur de vibrations de torsion (3) selon l'une quelconque des revendications précédentes,
**caractérisé en ce que**
l'au moins un sabot d'extrémité (18a, 18b, 18c, 18d ; 218) est fabriqué en plastique.

11. Sabot d'extrémité (18a, 18b, 18c, 18d ; 218) pour un amortisseur de vibrations de torsion (3) selon l'une quelconque des revendications précédentes, **caractérisé en ce que** le sabot d'extrémité (18a, 18b, 18c, 18d ; 218) présente un évidemment à travers lequel un dispositif d'entraînement (19a, 19b ; 219) peut être inséré.

12. Sabot d'extrémité (18a, 18b, 18c, 18d ; 218) selon la revendication 11, **caractérisé en ce que** le sabot d'extrémité (18a, 18b, 18c, 18d ; 218) présente une section transversale en forme de U, en forme de V ou en forme de L perpendiculairement au sens de rotation, et **en ce que** le dispositif d'entraînement (19a, 19b ; 219) peut passer à travers les deux branches de la forme en U ou en V ou peut passer devant la branche unique de la forme en L.
